# EUROPÄISCHE PATENTSCHRIFT

(11) **EP 1 680 608 B1**
(45) Veröffentlichungstag und Bekanntmachung des Hinweises auf die Patenterteilung: **27.06.2007**
(21) Anmeldenummer: 04789907.5
(22) Anmeldetag: 01.10.2004
(51) Int. Cl.: F16C 11/06

(54) **KUGELGELENK FÜR EIN KRAFTFAHRZEUG**
BALL JOINT FOR A MOTOR VEHICLE
ARTICULATION A ROTULE POUR VEHICULE A MOTEUR

(30) Priorität: 29.10.2003 DE 10350640
(43) Veröffentlichungstag der Anmeldung: 19.07.2006
(73) Patentinhaber: ZF FRIEDRICHSHAFEN Aktiengesellschaft, 88038 Friedrichshafen (DE)
(72) Erfinder: GRÄBER, Jürgen, 32351 Stemwede-Dielingen (DE); SPRATTE, Joachim, 49090 Osnabrück (DE)
(86) Internationale Anmeldenummer: PCT/DE2004/002190
(87) Internationale Veröffentlichungsnummer: WO 2005/045265

(56) Entgegenhaltungen:
- EP-A1- 0 617 260
- DE-C1- 10 110 738

## Beschreibung

Die Erfindung betrifft ein Kugelgelenk für ein Kraftfahrzeug, mit einem eine Ausnehmung aufweisenden Gehäuse, einem einen Zapfen und eine Gelenkkugel aufweisenden Kugelzapfen, der mit seiner Gelenkkugel drehbar und schwenkbar in der Ausnehmung des Gehäuses gelagert ist, wobei sich der Zapfen durch eine in dem Gehäuse vorgesehene Öffnung aus diesem heraus erstreckt, einem zwischen dem Gehäuse und dem Zapfen angeordneten Dichtungsbalg und einer mehrteiligen Messanordnung, welche wenigstens einen Signalgeber und wenigstens einen Sensor aufweist.

Fahrwerksdaten bezüglich Lenkwinkel sowie Beladungs- bzw. Einfederungszustand werden heute durch geeignete Sensoren im Fahrzeug ermittelt, um Daten für elektronische Systeme zu liefern, die zur Fahrdynamikregelung oder z. B. zur Scheinwerferleuchtweitenregelung genutzt werden. Diese Sensoren werden als separate Baugruppe, häufig über Mechaniken an die Lenker des Fahrwerks angekoppelt. Ferner gibt es die Bestrebung, diese Sensoren in Kugelgelenke der Lenker zu integrieren, so dass das Gelenk selbst Teil einer Sensoranordnung ist.

Aus der EP 0 617 260 A1 ist ein Kugelgelenk mit einer mit einem Gehäuse verbundenen Kugelpfanne und einem mit einem Zapfen verbundenen Kugelkopf bekannt, der drehbar in dem Gehäuse gelagert ist. In dem Kugelkopf ist ein Permanentmagnet angeordnet, dem ein in dem Gehäuse angeordneter magnetischer Fühler gegenüber liegt. Der magnetische Dipol des Permanentmagneten ist senkrecht zur Längsachse des Kugelzapfens ausgerichtet, wobei ein Faltenbalg zum Schutz des Kugelgelenks vor Umwelteinflüssen vorgesehen ist. Durch eine Verdrehung des Kugelkopfes in der Kugelpfanne wird der Permanentmagnet mit verdreht, so dass sich das Magnetfeld bezüglich des magnetfeldempfindlichen Fühlers ändert und ein Lagesignal erzeugt wird. Die zusätzlich auftretenden räumlichen Bewegungen können bei entsprechender Auswertung zu Regelungszwecken herangezogen werden.

Aus der DE 101 10 738 C1 ist ein Kugelgelenk mit einem Gehäuseabschnitt und einem einen Bolzenabschnitt und einen Kugelabschnitt aufweisenden Kugelbolzen bekannt, der mit seinem Kugelabschnitt in einer in dem Gehäuseabschnitt vorgesehenen Aufnahme dreh- und schwenkbar gelagert ist. In dem Kugelabschnitt ist ein Permanentmagnet in radialer Ausrichtung zum Mittelpunkt des Kugelabschnitts angeordnet, wobei ein magnetfeldempfindliches Sensorelement in die Aufnahme integriert ist. Bei einer Drehbewegung des Kugelabschnitts bewegt sich der Permanentmagnet relativ zu dem Sensorelement, so dass die relative Drehlage des Kugelabschnitts in der Aufnahme erfasst werden kann.

Derartige Kugelgelenke weisen den Nachteil auf, dass durch die Anordnung von Magnet und magnetfeldempfindlichem Fühler im Lagerungsbereich der Gelenkkugel die tribologischen Eigenschaften des Kugelgelenks negativ beeinflusst werden können.

Aufgabe der Erfindung ist es, ein Kugelgelenk zu schaffen, bei dem diese negative Beeinflussung der tribologischen Eigenschaften nicht auftreten kann.

Diese Aufgabe wird erfindungsgemäß durch ein Kugelgelenk mit den Merkmalen nach Anspruch 1 gelöst. Bevorzugte Weiterbildungen sind in den Unteransprüchen beschrieben.

Das erfindungsgemäße Kugelgelenk für ein Kraftfahrzeug weist ein mit einer Ausnehmung versehenes Gehäuse, einen einen Zapfen und eine Gelenkkugel aufweisenden Kugelzapfen, der mit seiner Gelenkkugel drehbar und schwenkbar in der Ausnehmung des Gehäuses gelagert ist, wobei sich der Zapfen durch eine in dem Gehäuse vorgesehene Öffnung aus diesem heraus erstreckt, einen zwischen dem Gehäuse und dem Zapfen angeordneten Dichtungsbalg und eine mehrteilige Messanordnung mit wenigstens einem Signalgeber und wenigstens einem Sensor auf, wobei die Messanordnung zwischen dem zapfenseitigen Ende der Gelenkkugel und dem zapfenseitigen Ende des Dichtungsbalgs angeordnet ist.

Bei dem erfindungsgemäßen Kugelgelenk ist die Messanordnung vollständig außerhalb des Lagerungsbereichs für die Gelenkkugel angeordnet, so dass die Messanordnung zu keiner negativen Beeinflussung des tribologischen Verhaltens des Kugelgelenks führen kann. Zudem kann die Messanordnung von dem Dichtungsbalg vor Umwelteinflüssen wie Schmutz und Wasser geschützt werden.

Ferner sind durch das erfindungsgemäße Vorsehen der Messanordnung im sogenannten "Halsbereich" des Gelenks im Vergleich zum Stand der Technik keine Einschränkungen hinsichtlich der Messung der Verschwenkung und/oder der Verdrehung des Kugelzapfens gegenüber dem Gehäuse vorhanden. Daher ist es mit einem erfindungsgemäßen Kugelgelenk möglich, die Verschwenkung und/oder der Verdrehung des Kugelzapfens gegenüber dem Gehäuse gemäß aller drei Freiheitsgrade des Gelenks zu messen.

Bei dem erfindungsgemäßen Kugelgelenk bilden der Signalgeber und der Sensor jeweils ein Teil der Messanordnung, wobei zur Bestimmung der Verschwenkung und/oder der Verdrehung des Kugelzapfens gegenüber dem Gehäuse bevorzugt ein Teil der Messanordnung am Zapfen und ein anderer Teil der Messanordnung am Gehäuse angeordnet ist. Insbesondere eignet sich der die Öffnung umgebende Randbereich des Gehäuses zur Befestigung des Sensors oder des Signalgebers.

Für das gleichzeitige Messen von Verschwenkung und Verdrehung des Kugelzapfens hat es sich als vorteilhaft erwiesen, wenn der Signalgeber ein Dipolfeld erzeugt. Anhand der Ausrichtung und der Intensität dieses Dipolfeldes ist die Verschwenkung und/oder Verdrehung des Kugelzapfens auf einfache Weise durch einen oder mehrere Sensoren erkennbar. Als Dipolfeld kann ein elektrisches Feld gewählt werden, allerdings wird aufgrund der Stör-Unempfindlichkeit von Magnetfeldern ein Magnetfeld als Dipolfeld bevorzugt, wobei der Signalgeber als Magnet und der Sensor als magnetfeldempfindlicher Sensor ausgebildet ist. Für den magnetfeldempfindlichen Sensor sind alle gebräuchlichen magnetischen Sensoren geeignet, wobei je nach Anwendungsfall z. B. ein Hall-Sensor oder ein magnetoresistiver Sensor zum Einsatz kommen kann.

Das erfindungsgemäße Kugelgelenk ist aber nicht auf eine Messung von magnetischen oder elektrischen Feldern beschränkt, so dass auch optische oder akustische (z. B. Ultraschall) Messungen anwendbar sind, die z.B. über die Erfassung von Reflexionsänderungen (Intensität) oder von Interferenzen an ausgerichteten planen Flächen zur Bestimmung der Verschwenkung bzw. Verdrehung des Kugelzapfens herangezogen werden können. Auch können Induktionsverfahren oder Laufzeitmessungen sowie Kombinationen der vorgenannten Messverfahren verwendet werden.

Falls ein magnetischer Signalgeber verwendet wird, kann dieser als Permanentmagnet ausgebildet sein. Insbesondere ist es aber auch möglich, den Signalgeber als Elektromagnet auszubilden, wobei dem das Magnetfeld hervorrufenden Strom ein Signal überlagert bzw. der das Magnetfeld hervorrufende Strom moduliert werden kann. Die daraus resultierende Modulation des Magnetfeldes ermöglicht das Ausnutzen zusätzlicher Effekte bei der Messung.

Bei kleinen Drehwinkeln kann ein einziger Sensor zum Messen der Verschwenkung und/oder der Verdrehung des Kugelzapfens ausreichen. Bei größeren Drehwinkeln ist aber das Vorsehen von mehreren Sensoren bzw. von mehreren Signalgebern sinnvoll, wobei schon mit zwei Sensoren gute Ergebnisse erzielt werden können. Die Unterscheidung zwischen Kippbewegung und Drehbewegung kann aus den Einzelsignalen der Sensoren berechnet werden, die bevorzugt auf einem Kreis angeordnet sind.

Je höher die Anzahl der Sensoren ist, desto höher ist die erzielbare Auflösung bei der Messung, wobei die Möglichkeit besteht, mehrere Einzelsensoren als sogenannte Sensor-Arrays in einem einzigen Bauelement zu integrieren. Diese können dann auch vektorielle Messgrößen liefern, die für die Berechnung der Ausrichtung eines Dipolfeldes vorteilhaft sind.

Bevorzugt weist die Messanordnung zwei Signalgeber und drei Sensoren auf, womit auch größere Drehwinkel von z. B. mehr als 90° problemlos erfasst werden können. Dabei hat es sich als vorteilhaft erwiesen, wenn die beiden Signalgeber einander diametral gegenüberliegend am Zapfen und die Sensoren die Eckpunkte eines Dreiecks bildend an dem die Öffnung umgebenden Randbereich des Gehäuses angeordnet sind.

Mit der Verwendung von mehreren Signalgebern und mehreren Sensoren kann verhindert werden, dass die Sensoren bei überlagerten Dreh- und Kippbewegungen uneindeutige Informationen liefern. Werden drei Sensoren verwendet, können sogar Totpunkte bei der Messung weitgehend ausgeschlossen werden.

Sind zwei Signalgeber als Magnete ausgebildet, die einander diametral gegenüberliegend an dem Zapfen angeordnet sind, liegt insbesondere der Nordpol des ersten Magneten dem Südpol des zweiten Magneten und der Nordpol des zweiten Magneten dem Südpol des ersten Magneten gegenüber. Ferner kann die resultierende Magnetisierung jedes Magneten auf einer senkrecht zur Mittenlängsachse des Kugelzapfens verlaufenden Ebene liegen. Die bevorzugt auf dem die Öffnung umgebenden Randbereich des Gehäuses angeordneten Sensoren sind dabei insbesondere als magnetfeldempfindliche Sensoren ausgebildet.

Anstelle von Dipolfeldem können auch Quadropol-Felder oder andere Felder abweichender Geometrie genutzt werden, wobei diese Felder z. B. Magnetfelder sein können, die von einem magnetisierten Ring mit entsprechenden Polen erzeugt werden, der an dem Zapfen montiert ist.

Die Erfindung wird nachfolgend anhand einer bevorzugten Ausführungsform unter Bezugnahme auf die Zeichnung beschrieben. In der Zeichnung zeigen:
- Figur 1:: eine Schnittansicht einer Ausführungsform des erfindungsgemäßen Kugelgelenks,
- Figur 2:: eine schematische Schnittansicht der Ausführungsform gemäß der Schnittlinie A-A' aus Figur 1,
- Figur 3:: ein schematisches Blockschaltbild der Messanordnung mit Auswerteeinheit,
- Figur 4:: ein schematisches Blockschaltbild einer modifizierten Ausführungsform mit Elektromagneten und Ansteuerungselektronik und
- Figur 5:: eine schematische Darstellung eines Sensor-Arrays.

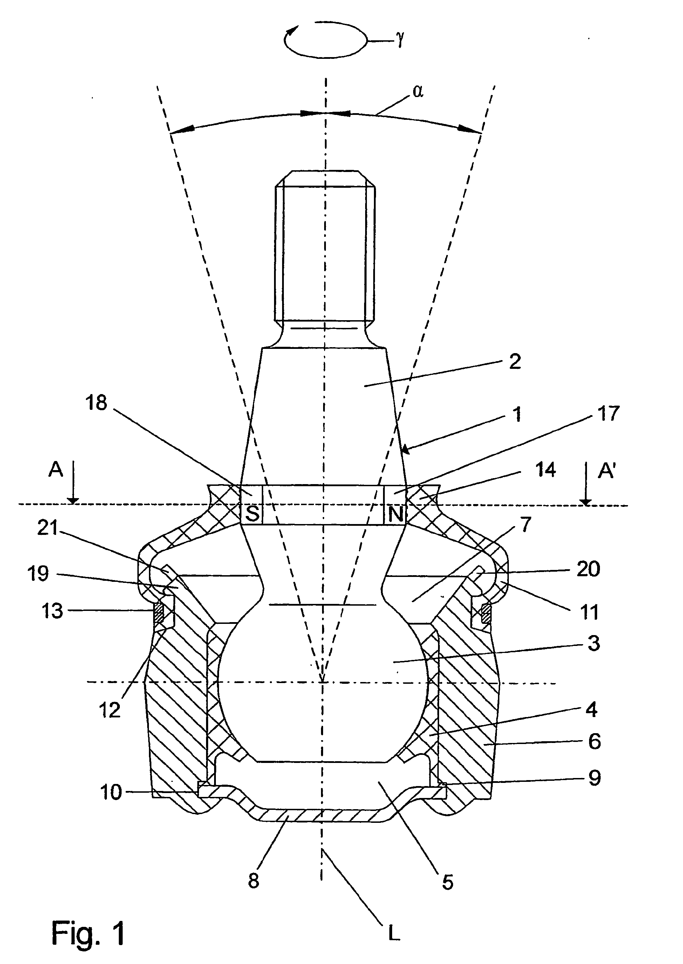

Aus Figur 1 ist eine Ausführungsform des erfindungsgemäßen Kugelgelenks ersichtlich, wobei ein Kugelzapfen 1 mit einem Zapfen 2 und einer Gelenkkugel 3 unter Zwischenschaltung einer Lagerschale 4 in einer Ausnehmung 5 in einem Gehäuse 6 drehbar und schwenkbar gelagert ist. Der Kugelzapfen 1 erstreckt sich mit seinem Zapfen 2 durch eine in dem Gehäuse 6 vorgesehene Öffnung 7 aus diesem heraus, wobei das Gehäuse 6 an einem der Öffnung 7 gegenüberliegenden Ende über einen Deckel 8 verschlossen ist. Der Deckel 8 greift zusammen mit einem radialen Vorsprung 9 der Lagerschale 4 in eine in dem Gehäuse 6 vorgesehene Ringnut 10 ein, so dass der Deckel 8 und die Lagerschale 4 an dem Gehäuse 6 formschlüssig festgelegt sind.

Zwischen dem Gehäuse 6 und dem Zapfen 2 ist ein Dichtungsbalg 11 angeordnet, der mit seinem gehäuseseitigen Ende in einer in dem Gehäuse 6 ausgebildeten Nut 12 einliegt und über Spannringe 13 gehalten ist. An seinem zapfenseitigen Ende weist der Dichtungsbalg 11 einen Dichtbereich 14 auf, der dichtend an dem Zapfen 2 des Kugelzapfens 1 anliegt.

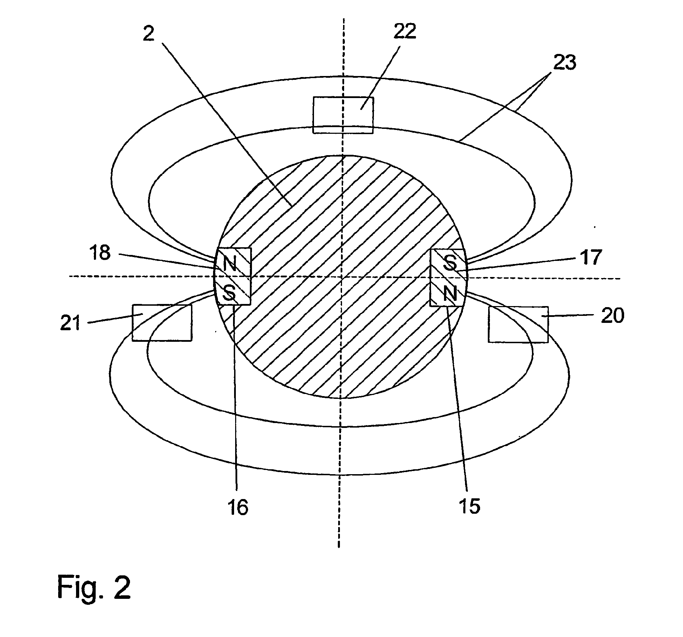

In dem Zapfen 2 sind zwei Ausnehmungen 15 und 16 vorgesehen (siehe Fig. 2), in welchen jeweils ein Magnet 17 bzw. 18 angeordnet ist. Die Magneten 17 und 18 sind dabei einander diametral gegenüberliegend an dem Zapfen 2 angeordnet, wobei der Nordpol N des Magneten 17 dem Südpol S des Magneten 18 und der Nordpol N des Magneten 18 dem Südpol S des Magneten 17 gegenüberliegt (siehe Fig. 2). Die Magnete 17 und 18 sind auf der Höhe des Dichtbereichs 14 am Zapfen 2 angeordnet, wobei die resultierende Magnetisierung in jedem Magneten 17, 18 auf einer senkrecht zur Mittenlängsachse L des Kugelzapfens verlaufenden Ebene liegt.

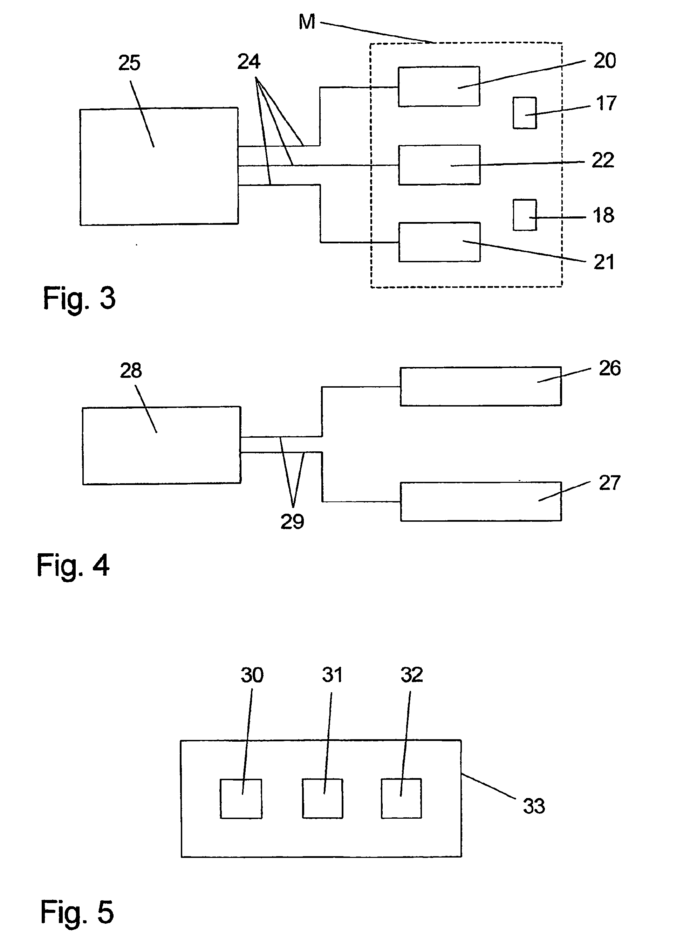

An einem die Öffnung 7 umgebenden Randbereich 19 des Gehäuses sind drei Sensoren 20, 21 und 22 (siehe Fig. 2) auf einem Kreis liegend angeordnet, welche das von den Magneten 17 und 18 ausgehende Magnetfeld erfassen können. Eine Auswertung der von den Sensoren erfassten Signale mittels einer elektronischen Auswerteeinheit 25 (siehe Fig. 3) liefert dabei die Verschwenkung α und/oder die Verdrehung γ des Kugelzapfens 1 relativ zum Gehäuse 6.

Aus Figur 2 ist eine Draufsicht auf einen Schnitt entlang der Schnittlinie A-A' aus Figur 1 ersichtlich, wobei der Übersichtlichkeit halber lediglich der geschnittene Zapfen 2 mit den Ausnehmungen 15 und 16 und den Magneten 17 und 18 sowie die drei magnetfeldempfindlichen Sensoren 20, 21 und 22 dargestellt sind. Der durch die Magneten 17 und 18 hervorgerufene magnetische Feldverlauf ist durch die Linien 23 angedeutet.

Wie aus Figur 2 ersichtlich, sind die magnetfeldempfindlichen Sensoren 20, 21 und 22 auf den Eckpunkten eines Dreiecks liegend angeordnet, wobei die beiden Magneten 17 und 18 innerhalb der Fläche des Dreiecks liegen.

Aus Fig. 3 ist eine schematische Darstellung eines elektrischen Schaltkreises ersichtlich, wobei die drei Sensoren 20, 21 und 22 über elektrische Leitungen 24 mit der elektronischen Auswerteeinheit 25 verbunden sind. Die Sensoren 20, 21, 22 und die Signalgeber 17, 18 bilden dabei die Teile einer mehrteiligen Messanordnung M, die gestrichelt dargestellt ist.

Bei der aus den Fig. 1 bis 3 ersichtlichen Ausführungsform sind die Magnete 17 und 18 als Permanentmagnete ausgebildet. Gemäß einer aus Fig. 4 ersichtlichen Abwandlung können die Magnete 17 und 18 aber auch als Elektromagnete 26 und 27 ausgebildet sein, welche von einer Ansteuerungselektronik 28 über Versorgungsleitungen 29 mit Strom versorgt werden. Dabei kann dem felderzeugenden Strom ein zusätzliches Signal überlagert sein.

Fig. 5 zeigt mehrere Sensoren 30, 31, 32, die zu einem einzigen Bauelement als sogenanntes Sensor-Array 33 zusammengefasst sind. Die aus den Fig. 1 bis 3 ersichtlichen Sensoren 20, 21 und 22 können jeweils oder insgesamt durch ein oder mehrere solcher Sensor-Arrays 33 ersetzt bzw. ergänzt werden, wobei die Sensoren 30, 31 und 32 magnetfeldempfindliche Sensoren sind.

### Bezugszeichenliste:

- 1: Kugelzapfen
- 2: Zapfen
- 3: Gelenkkugel
- 4: Lagerschale
- 5: Ausnehmung im Gehäuse
- 6: Gehäuse
- 7: Öffnung im Gehäuse
- 8: Deckel
- 9: radialer Vorsprung der Lagerschale
- 10: Ringnut im Gehäuse
- 11: Dichtungsbalg
- 12: Balgnut im Gehäuse
- 13: Spannringe
- 14: Dichtbereich des Dichtungsbalgs
- 15,16: Ausnehmungen im Zapfen
- 17,18: Magnete
- 19: Randbereich
- 20, 21, 22: magnetfeldempfindliche Sensoren
- 23: Magnetfeld
- 24: elektrische Leitungen
- 25: elektronische Auswerteeinheit
- 26,27: Elektromagnete
- 28: Ansteuerungselektronik
- 29: Versorgungsleitungen
- L: Mittenlängsachse
- M: mehrteilige Messanordnung
- N: Nordpole der Magneten
- S: Südpole der Magneten
- α: Verschwenkung
- γ: Verdrehung

## Patentansprüche

1. Kugelgelenk für ein Kraftfahrzeug, mit einem eine Ausnehmung (5) aufweisenden Gehäuse (6), einem einen Zapfen (2) und eine Gelenkkugel (3) aufweisenden Kugelzapfen (1), der mit seiner Gelenkkugel (3) drehbar und schwenkbar in der Ausnehmung (5) des Gehäuses (6) gelagert ist, wobei sich der Zapfen (2) durch eine in dem Gehäuse vorgesehene Öffnung (7) aus diesem heraus erstreckt, einem zwischen dem Gehäuse (6) und dem Zapfen (2) angeordneten Dichtungsbalg (11) und einer mehrteiligen Messanordnung (M), welche wenigstens einen Signalgeber (17, 18) und wenigstens einen Sensor (20, 21, 22) aufweist, **dadurch gekennzeichnet, dass**
die Messanordnung (M) zwischen dem zapfenseitigen Ende der Gelenkkugel (3) und dem zapfenseitigen Ende des Dichtungsbalgs (11) angeordnet ist.

2. Kugelgelenk nach Anspruch 1, **dadurch gekennzeichnet, dass** ein Teil der Messanordnung (M) am Zapfen (2) und ein anderer Teil der Messanordnung (M) am Gehäuse (6) angeordnet ist.

3. Kugelgelenk nach Anspruch 1 oder 2, **dadurch gekennzeichnet, dass** ein Teil der Messanordnung (M) an dem die Öffnung (7) umgebenden Randbereich (19) des Gehäuses (6) angeordnet ist.

4. Kugelgelenk nach einem der vorangehenden Ansprüche, **dadurch gekennzeichnet, dass** der Signalgeber (17, 18) zum Erzeugen eines Dipolfelds ausgelegt ist.

5. Kugelgelenk nach Anspruch 4 **dadurch gekennzeichnet, dass** der Signalgeber (17, 18) von einem Magnet und der Sensor (20, 21, 22) von einem magnetfeldempfindlichen Sensor gebildet ist.

6. Kugelgelenk nach Anspruch 5, **dadurch gekennzeichnet, dass** der Signalgeber (17, 18) von einem Permanentmagnet oder von einem Elektromagnet (26, 27) gebildet ist.

7. Kugelgelenk nach einem der vorangehenden Ansprüche, **dadurch gekennzeichnet, dass** die Messanordnung (M) mehrere Signalgeber (17, 18) und mehrere Sensoren (20, 21, 22) aufweist.

8. Kugelgelenk nach einem der vorangehenden Ansprüche, **dadurch gekennzeichnet, dass** die Messanordnung (M) zwei Signalgeber (17, 18) und drei Sensoren (20, 21, 22) aufweist.

9. Kugelgelenk nach Anspruch 8, **dadurch gekennzeichnet, dass** die beiden Signalgeber (17, 18) einander diametral gegenüberliegend am Zapfen (2) und die Sensoren (20, 21, 22) die Eckpunkte eines Dreiecks bildend an dem die Öffnung (7) umgebenden Randbereich (19) des Gehäuses (6) angeordnet sind.

## Claims

1. Ball joint for a motor vehicle, with a housing (6) which comprises a recess (5), a ball pin (1) which comprises a pin (2) and a joint ball (3) and which is mounted in a rotatable and pivotable manner in the recess (5) of the housing (6) by way of its joint ball (3), wherein the pin (2) extends through an opening (7) provided in the housing out of the latter, sealing bellows (11) disposed between the housing (6) and the pin (2), and a multi-part measuring arrangement (M) which comprises at least one signal generator (17, 18) and at least one sensor (20, 21, 22), **characterised in that**
the measuring arrangement (M) is disposed between the end of the joint ball (3) which is on the pin side and the end of the sealing bellows (11) which is on the pin side.

2. Ball joint according to Claim 1, **characterised in that** one part of the measuring arrangement (M) is disposed at the pin (2) and another part of the measuring arrangement (M) is disposed at the housing (6).

3. Ball joint according to Claim 1 or 2, **characterised in that** one part of the measuring arrangement (M) is disposed at the edge region (19) of the housing (6) which surrounds the opening (7).

4. Ball joint according to any one of the preceding Claims, **characterised in that** the signal generator (17, 18) is designed to generate a dipole field.

5. Ball joint according to Claim 4, **characterised in that** the signal generator (17, 18) is formed by a magnet and the sensor (20, 21, 22) by a magnetic field-sensitive sensor.

6. Ball joint according to Claim 5, **characterised in that** the signal generator (17, 18) is formed by a permanent magnet or by an electromagnet (26, 27).

7. Ball joint according to any one of the preceding Claims, **characterised in that** the measuring arrangement (M) comprises a plurality of signal generators (17, 18) and a plurality of sensors (20, 21, 22).

8. Ball joint according to any one of the preceding Claims, **characterised in that** the measuring arrangement (M) comprises two signal generators (17, 18) and three sensors (20, 21, 22).

9. Ball joint according to Claim 8, **characterised in that** the two signal generators (17, 18) are disposed diametrically opposite one another at the pin (2) and the sensors (20, 21, 22) are disposed at the edge region (19) of the housing (6) which surrounds the opening (7), thus forming the corner points of a triangle.

## Revendications

1. Joint à rotule pour un véhicule automobile avec un boîtier (6) présentant un évidement (5), un pivot à rotule (1) comportant un pivot (2) et une rotule d'articulation (3), qui, par sa rotule d'articulation (3) est supporté de manière à pouvoir tourner et pivoter dans l'évidement (5) du boîtier (6), le pivot (2) s'étendant à l'extérieur du boîtier par une ouverture (7) prévue dans celui-ci, avec un soufflet d'étanchéité (11) disposé entre le boîtier (6) et le pivot (2) et un dispositif de mesure (M) en plusieurs parties qui comporte au moins un transmetteur de signaux (17, 18) et au moins un capteur (20, 21, 22), **caractérisé en ce que** le dispositif de mesure (M) est disposé entre l'extrémité côté pivot de la rotule d'articulation (3) et l'extrémité côté pivot du soufflet d'étanchéité (11).

2. Joint à rotule selon la revendication 1, **caractérisé en ce qu'**une partie du dispositif de mesure (M) est disposée sur le pivot (2) et une autre partie du dispositif de mesure (M) sur le boîtier (6).

3. Joint à rotule selon la revendication 1 ou 2, **caractérisé en ce qu'**une partie du dispositif de mesure (M) est disposée sur la zone de bordure (19) du boîtier (6) entourant l'ouverture (7).

4. Joint à rotule selon l'une des revendications précédentes, **caractérisé en ce que** le transmetteur de signaux (17, 18) est conçu pour produire un champ dipolaire.

5. Joint à rotule selon la revendication 4, **caractérisé en ce que** le transmetteur de signaux (17, 18) est formé par un aimant et le capteur (20, 21, 22) par un capteur réagissant aux champs magnétiques.

6. Joint à rotule selon la revendication 5, **caractérisé en ce que** le transmetteur de signaux (17, 18) est formé par un aimant permanent ou par un électro-aimant (26, 27).

7. Joint à rotule selon l'une des revendications précédentes, **caractérisé en ce que** le dispositif de mesure (M) comporte plusieurs transmetteurs de signaux (17, 18) et plusieurs capteurs (20, 21, 22).

8. Joint à rotule selon l'une des revendications précédentes, **caractérisé en ce que** le dispositif de mesure (M) comporte deux transmetteurs de signaux (17, 18) et trois capteurs (20, 21, 22).

9. Joint à rotule selon la revendication 8, **caractérisé en ce que** les deux transmetteurs de signaux (17, 18) sont disposés diamétralement opposés l'un à l'autre sur le pivot (2) et les capteurs (20, 21, 22), formant les angles d'un triangle, sont disposés sur la zone de bordure (19) du boîtier (6) entourant l'ouverture (7).
